Europäisches Patentamt

European Patent Office

Office européen des brevets

(11) Publication number: **0 374 796 B1**

# EUROPEAN PATENT SPECIFICATION

(45) Date of publication of patent specification: **19.10.94**  (51) Int. Cl.5: **A01N  25/30**, A01N 25/10

(21) Application number: **89123389.2**

(22) Date of filing: **18.12.89**

(54) **Stable emulsion formulations of water-insoluble organic pesticides, their use and preparation.**

(30) Priority: **19.12.88 US 286569**

(43) Date of publication of application:
**27.06.90 Bulletin  90/26**

(45) Publication of the grant of the patent:
**19.10.94 Bulletin  94/42**

(84) Designated Contracting States:
**CH DE FR GB IT LI NL**

(56) References cited:
EP-A- 0 096 103      EP-A- 0 289 356
EP-A- 0 357 149      DE-A- 3 304 457
FR-A- 2 285 431      US-A- 4 303 642

(73) Proprietor: **DOWELANCO**
**9002 Purdue Road**
**Indianapolis, Indiana 46268-3030 (US)**

(72) Inventor: **Wessling, Ritchie A.**
**1126 Shattuck Avenue**
**Berkeley California 94707 (US)**
Inventor: **Pickelman, Dale M.**
**319 Price**
**Auburn Michigan 48611 (US)**
Inventor: **Wujek, Dennis G.**
**5013 Stony Creek Drive**
**Midland Michigan 48640 (US)**

(74) Representative: **Huber, Bernhard, Dipl.-Chem.**
**et al**
**Patentanwälte**
**H. Weickmann, Dr. K. Fincke**
**F.A. Weickmann, B. Huber**
**Dr. H. Liska, Dr. J. Prechtel, Dr. B. Böhm**
**Postfach 86 08**
**20**
**D-81635 München (DE)**

**Description**

The present invention concerns a formulation, its preparation and use. The formulations are stable as concentrates for water-insoluble organic pesticides.

As shown in U.S. Patent 3,400,093, known methods for incorporating pesticides into water-based systems have been unsatisfactory in that the pesticides tend to settle out and do not remain uniformly dispersed. The U.S. Patent proposes to solve that problem by emulsion polymerization of monomers in the presence of the pesticide. However, certain pesticides, such as chlorpyrifos and chlorpyrifos-methyl, tend to hydrolyze if heated to polymerization temperatures for extended periods of time and, in addition, the presence of a pesticide in a monomer will influence the polymerization to some degree, e.g., the rate of polymerization, the conversion and/or the molecular weight of the polymer.

U.S. Patent 4,303,642 proposes to solve the above problems by adding the pesticide to a finished latex wherein the polymeric particles were in a size range of from 0.03 to 20 microns, and increases in pesticide efficiency were, indeed demonstrated, although optimum stability and transfer through the soil were not obtained.

Rogiers and Bognolo, in a paper presented at the Sixth International Congress of Pesticide Chemistry, Ottawa, Canada, August 10-15, 1986, reported on the stabilization of an Ethirincol suspension concentrate with a graft stabilizer of a polymethylmethacrylate-polymethacrylic acid grafted with polyethylene oxide.

U.S. Patents 4,199,363 and 4,203,716 disclose a process for uniformly dispersing hydrophobic materials through hydrophilic colloid layers, such as photographically useful layers containing gelatin.

Soil pesticides are usually incorporated into the soil mechanically or are spread on the soil surface to be leached into the soil by rainfall. In either case, the pesticide may not be able to function properly because it becomes immobilized at the point of application. This will certainly be the case for large hydrophobic molecules and the problem is compounded further if the carrier is itself a large hydrophobic particle.

In conventional formulations the surfactants are absorbed on the particle surface and are in equilibrium with the aqueous phase and the surface of soil particles. Since the surface area is so large, the soil tends to act as an infinite sink of low surfactant concentration and much of the surfactant initially on the pesticide particle transfers to the soil, whereupon the pesticide particle either deposits on the soil or flocculates, thereby losing the ability to migrate through the soil. In the present invention the problem of a lack of the ability of the particle to migrate through the soil is avoided.

In accordance with the present invention, an aqueous pesticidal emulsion concentrate formulation of a water-insoluble organic pesticide is prepared where the emulsion comprises: (1) a water-insoluble organic pesticide; and (2) a structured particle latex composed of nonionic particles to which is bound a stabilizing layer containing stabilizing pH independent ionic groups chemically bound at or near the surface of the polymer particles. Optional plasticizers and/or cosurfactants may also be present.

The pesticidal formulation is formed by an association of the pesticide with an aqueous dispersion of a structured particle latex having polymer particles (carrier) with a nonionic core that is compatible with the pesticide and a stabilizing ionic surface layer containing stabilizing pH independent ionic groups chemically bound at or near the surface of the polymer particles. This association results in the formation of a stable aqueous emulsion formulation when water is added. These final pesticidal formulations are more stable to coalescence than emulsions made with conventional or polymeric surfactants and are very capable of migrating through the soil to which they are applied and are not deposited on the soil nor is there any flocculation of the pesticide particles.

It has been found that the said structured particle latex spontaneously absorbs organic pesticides with low water solubility upon simple commingling.

The preferred formulations are anionic, and the reactive polymeric surfactant (RPS) in these cases is selected to optimize stability and migratory ability of the particle in the soil. Such surfactants are obtained by using a combination of pH independent anionic monomers and nonionic monomers. Combinations of sulfonate monomers and nonionic hydrophobic and hydrophilic units form the RPS backbone. Preferably, the backbone of the RPS is formed by the copolymerization of ethylenically unsaturated monomers. The resulting aqueous emulsions product is much more stable to coalescence than emulsions made with conventional surfactants.

The structured particle latexes that can be used in the present invention include those latexes described in U.S. Patents 4,337,185 and 4,427,819. Such latexes advantageously have stabilizing ionic groups chemically bound at or near the surface of the polymer particles which are dispersed in aqueous media.

The pesticidal formulations can be prepared by blending the active pesticidal ingredient, in the liquid state, with the structured particle latex, with agitation, for a sufficient time for the active ingredient to diffuse into the particles. If the active ingredient is not a liquid per se, it can be melted or dissolved in a water-immiscible solvent. If it is too insoluble to migrate through the aqueous phase when the concentrate is mixed with water, it may be necessary to add a partially water compatible coupling solvent or a nonionic surfactant to facilitate mixing. The coupling solvent can be optionally stripped from the mixture after the swelling. The coupling solvent preferably boils below the boiling point of water. Representative water miscible coupling solvents include, for example, acetone, methyl ethyl ketone, tetrahydrofuran and $C_1$-$C_4$ alcohols. The coupling solvent can be optionally, stripped from the mixture after the pesticide is incorporated.

Preferably the surface layer is formed by grafting a reactive polymeric surfactant (RPS) to the nonionic polymer core thus rendering the ionic stabilizing groups nondesorbable. Grafting may be carried out during the formation of the core particle itself or by reaction of the RPS with a preformed latex formed by emulsion polymerization or emulsification of an existing polymer.

Because the ionic surface layer is bound to the particle, the concentration of ionic groups can be much higher than is possible with a conventional latex, and the latex retains colloidal stability even under extreme conditions such as high dilution of the latex in soil.

The latex can optionally contain (1) a compatibilizing or coupling solvent, (2) a plasticizer or swelling agent for the particle that is also a solvent for the the pesticide and/or (3) a cosurfactant.

The formulation may contain cosolvents which act as swelling agents or plasticizers to improve compatibility of polymer and pesticide. In addition to reducing the Tg of the polymer, the plasticizers can also depress the melting point of crystalline pesticides and aid in release after application.

Suitable cosolvents or plasticizers include, for example, methyl esters of fatty acids such as caproic, lauric, myristic, oleic and tallowic; glycerides such as the oils of cottonseed, soybean, castor bean, corn; and triacetin, Citroflex™ A4 and alkyl aromatics. Preferred plasticizers are Citroflex™ A4, and the methyl esters of caproic, lauric and oleic acid.

It may also be advantageous to employ a cosurfactant, such as nonionic ethylene oxide adducts of alkyl phenols to facilitate transfer of the pesticide or a pesticide solution through the aqueous phase to the hydrophobic core of the particle. Such surfactants are not necessary for stabilizing the emulsion once formed. Useful pesticide solutions are solutions of pesticides and cosolvents that retain fluid character, i.e., noncrystalline state, within the carrying particle for optimum low temperature stability and formulation reconstitution after freeze-thaw cycling.

In forming the compositions of this invention, the process allows each specific component to be independently optimized to provide the most effective desired emulsion. The composition of the surface layer is selected to provide the required colloidal stability. The composition of the core is selected to provide the required compatibility with the pesticide.

Ideally, the carrier employed to transport the pesticide should be a small hydrophilic colloidal particle with a high negative charge to promote rapid movement in the soil. In order to be effective, however, the particle must be stable against flocculation by polyvalent cations in the soil, and the ionic groups must be bound to the particle to avoid redistribution of the stabilizing groups, i.e., surfactant, to the surface of the soil particles. Because carboxylated latexes are not stable against flocculation by polyvalent cations they are not suitable for this use.

The swollen anionic particles are, in a colloidal sense, very stable, maintaining their identity in the soil and functioning as a reservoir of the pesticide, which when applied can move through the soil. The swollen cationic particles are stable when sprayed aerially providing enhanced adhesion to foliage and, if desired, they provide immobilization of the pesticide on the soil surface for special pesticidal uses.

Representative water insoluble organic pesticides useful in the practice of the present invention include one or more pesticides from the classes of acylurea insecticides, organophosphorous insecticides, pyrethroid insecticides, aryloxyaryl herbicides and sulfonamide herbicides. Examples of such pesticides include

the acylurea insecticides described in U.S. Patent Nos. 4,148,902; 4,173,637 and Reissue 30,563, especially 1-{3,5-dichloro-4-[(5-trifluoromethyl)-3-chloro-2-pyridyloxy]phenyl}-3-(2,6-difluorobenzoyl) urea (common name Chlorfluazuron);

the organophosphorous insecticides described in U.S. Patent Nos. 3,244,586; 4,429,125; 4,654,329 and 4,729,987, especially chlorpyrifos and chlorpyrifos methyl;

the pyrethroid insecticides such as cypermethrin, permethrin and fenvalerate;

the aryloxyaryl herbicides described in U.S. Patent Nos. 4,550,192; 4,551,170 and 4,750,931, especially 2-{4-[(5-trifluoromethyl)-(2--pyridinyl)oxy]phenoxy}propanoic acid; 2-{4-[(3-chloro-5-trifluoromethyl)-(2-pyridinyl)oxy]phenoxy}propanoic acid, methyl ester; 2-{4-[(3-chloro-5-trifluoromethyl)-(2-pyridinyl)oxy]-phenoxy}propanoic acid, ethyl ester; and 2-{4-[(3-fluoro-5-trifluoromethyl)-(2-pyridinyl)oxy]-phenoxy}propanoic acid, methyl ester; and

the sulfonamide herbicides described in U.S. Patent Nos. 4,731,446; 4,740,233; 4,741,764 and 4,755,212, especially N-(2,6-dichlorophenyl)-5,7-dimethoxy-1,2,4-triazolo(1,5a)pyrimidine-2-sulfonamide; N-(2,6-dichloro-3-methylphenyl)-5,7-dimethoxy-1,2,4-triazolo(1,5a)-pyrimidine-2-sulfonamide; N-(2,6-dichlorophenyl)-5-methyl-7-methylthio-1,2,4-triazolo(1,5a)pyrimidine-2-sulfonamide; N-(2-trifluoromethylphenyl)-5-methyl-7-methylthio-1,2,4-triazolo(1,5a)pyrimidine-2-sulfonamide; N-(2,6-dichloro-3-methylphenyl)--7-methoxy-5-methyl-1,2,4-triazolo(1,5a)pyrimidine-2-sulfonamide; and N-(2,6-dichloro-3-methylphenyl)-7-ethoxy-5-methyl-1,2,4-triazolo(1,5a)pyrimidine-2-sulfonamide.

The insecticidal compounds of the present invention impart remarkable insecticidal effect to larvae of Lepidoptera, Coleoptera, Hymenoptera and Diptera, for example, larvae of the following insects:

diamondback moth (*Plutella xylostella*), common white (*Pieris rapae crucivora*), cabbage armyworm (*Mamesta brassicae*), cabbage looper (*Plusia nigrisigma*), tobacco cutworm (*Prodenia litura*), smoller citrus dog (*Papilio xuthus*), small blackish cochlid (*Seopelodes contracta*), fall webworm (*Hyphantria cunea*), gypsy moth (*Lymantria dispar*), rice stem borer (*Chilo suppressalis*), bollworm (*Heliothis zea*), tobacco budworm (*Heliothis virescens*), bollweevil (*Anthonomus grandis*), confused flour beetle (*Tribolium confusum*), colorado potato beetle (*Leptinotarsa decemlineata*), sawfly (*Neurotoma irdescens*), Culex mosquito (*Culex pipiens pallens*), mosquito (*Culex pipiens molestus*).

The herbicidal compounds of the present invention are useful in the treatment of plants such as, for example, corn (*Zea mays*), rice (*Oryza sativa*), wheat (*Triticum aestivum*), barnyardgrass (*Echinochloa crus−galli*), crabgrass, yellow foxtail (*Setaria lutescens*), Johnson grass (*Sorghum halepense*) and wild oats (*Avena fatua*).

Generally the amount of the water insoluble organic pesticides which can be present in association with the particles of the structured particle latex is in the range of from 1:50 to 10:1 in terms of a weight ratio of the pesticide to the particles of the structured particle latex.

The nonionic, hydrophobic units suitably are derived from any copolymerizable ethylenically unsaturated monomer which, when in the form of an amorphous homopolymer, would have a solubility in water of less than about 0.1 percent. Specifically, styrene and/or methyl methacrylate function as the nonionic hydrophobic units. However, it should be noted that a backbone containing nonpolar sequences like styrene will require proportionately more ionic or hydrophilic units to achieve the same level of activity.

In some cases, it is advantageous to employ small amounts (e.g., usually less than about 15 weight percent and preferably from 0 to 5 weight percent based upon the weight of the instant reactive polymeric surfactants) of very hydrophilic but not ionic comonomers for control of the surface activity and water solubility of the interpolymeric polyelectrolyte without having to use more of the ionic comonomers. Acrylamide, methacrylamide, hydroxyethyl acrylate and hydroxypropyl acrylate are particularly useful for this purpose.

Low concentrations of monomers with weak acid or weak base groups and salts thereof may also be used provided that the pH independence of the RPS is not substantially altered, e.g., a minor amount of a vinyl monomer such as acrylic acid or aminoethyl methacrylate (or the hydrochloride salt thereof) could be included to promote adhesion, serve as reactive sites, and the like.

The core polymer composition is selected to compatibilize the particle with the active ingredient. The polymer must be substantially water insoluble and present in sufficient amount to form a structured particle in water.

Preferably the core polymer of the structured particle composition has a glass transition temperature (Tg) below the use temperature, preferably less than about 30ᐧC. (The Tg is easily determined using conventional differential thermal analysis.) Compatibility with the active ingredient can be tailored by copolymerising the appropriate nonionic hydrophobic monomers. Selection can be made on the basis of a typical formulation scheme employing, e.g., known solubility parameters.

Typical monomers useful in preparing copolymers used in forming the core of the structured particles of this invention include, for example, styrenics, acrylates, methacrylates, isoprene, butadiene, acrylonitrile, ethylene, vinyl acetate, vinyl chloride and vinylidene chloride. By copolymerization, polymers having desired compatibility with the pesticides can be prepared using solubility parameters to select the desired composition.

The formulations of the present invention are useful in a method for the control of the growth of agricultural pests in foliar or soil environments wherein said pest or their foliar or soil environments are contacted with a pesticidally effective amount of the stable aqueous formulation of the present invention.

The following examples illustrate the present invention and the manner by which it can be practiced, but as such, are not to be construed as limitations upon the overall scope of the invention. In the following examples, all parts are by weight unless otherwise specified and the latexes of Examples 1 through 4 are comparative latexes which are not useful in the present invention.

Example I:

Latex #1: Rubber Latex Stabilized With Surfactant

The rubber particles are crosslinked styrene/butadiene copolymer (7 percent styrene, 93 percent butadiene) having average diameters of 1100 Å as measured by Brice Phoenix™ Light Scattering Unit. The particles are stabilized in the latex with 3 percent sodium dodecylbenzene sulfonate based on polymer. The concentration measures 32.7 percent solids. This latex fails the
   (a) acetone dilution test,
   (b) the freeze-thaw test and
   (c) the pesticide formulation freeze-thaw stability test.
   (a) Acetone Dilution Test:
      1 part by weight stabilizer at 20 percent solids added to 9 parts acetone. No observable coagulation is considered to pass the test.
   (b) Freeze-Thaw Test: and
   (c) Pesticide formulation freeze-Thaw Test
      20 Grams sample at -10°C. to -15°C. for at least 4 hours and then at 35°C. for one hour. No observable flocculation or viscosity increase is considered to pass the test.

(c) Pesticide Formulation

| Ingredient | (Parts by weight) |
|---|---|
| Chlorpyrifos | 2.0 |
| Methyl laurate | 1.0 |
| Ethoxylated Nonyl Phenol Surfactant | 1.0 |
| Latex example (solids) | 1.0 |
| Water | Balance |
| | 10 |

Example II:

Latex #2: Rubber Latex Stabilized With Post-Added (RPS⊖)

A base polymeric surfactant is prepared by adding 1000 parts of isopropanol and 650 parts of deionized water to a stirred reactor provided with a nitrogen atmosphere and maintained at 50°C while continuously adding reactants to the reactor from five separate sources with proportionate feeds over 120 minutes. Feed compositions are as follows:

| PARTS | | COMPONENTS |
|---|---|---|
| | Feed #1 | |
| 1000 | | Deionized water |
| 384 | | 2-Sulfoethyl methacrylate |
| 62.2 | | Dimethylaminoethyl methacrylate |
| | Feed #2 | |
| 554 | | Methyl methacrylate |
| | Feed #3 | |
| 6.18 | | 2-Mercaptoethanol |
| 114 | | Deionized water |
| | Feed #4 | |
| 2.00 | | tertiary-butyl hydroperoxide |
| 118 | | Deionized water |
| | Feed #5 | |
| 1.50 | | Sodium formaldehyde hydrosulfite |
| 118.5 | | Deionized water |

2500 parts of deionized water are added to the reaction mixture followed by volatilization therefrom of 1700 parts of said water/isopropanol mixture. The resulting water soluble polymeric surfactant is converted to a reactive polymeric surfactant with pendant methacrylate vinyl sites by mixing with 56.3 parts glycidyl methacrylate while heating for 2 hours at 50°C (RPS⊖). The reactive polymeric surfactant, RPS⊖, has a solid content of 22.1 percent (21.8 percent solids by material balance), a total anionic charge of 1.87 milliequivalents per gram of solids and a number average molecular weight of less than 40,000.

The (RPS⊖) having pendant methacrylate groups is post added to the rubber latex described as Latex #1. 63.5 Parts of (RPS⊖) at 22.1 percent solids is added to 220.2 parts of Latex 1 and stirred overnight. The concentration of solids measures 30.3 percent. This latex fails the acetone dilution test, the freeze-thaw test, and the pesticide formulation room temperature stability test.

Example III:

Latex #3: Rubber Latex Encapsulated With Styrene normal-Butyl Methacrylate

1.00 Part 2,2'-azobis (2-methylpropanenitrile) is mixed with 764.5 parts of Latex #1 and heated to 70°C while stirring under a nitrogen atmosphere. 50 Parts of a 50/50 solution of styrene and normal(*n*)-butyl methacrylate are added continuously using the following schedule: 0 to 20 percent of monomers added over 2 1/2 hours at 70°C and the remaining 80 percent of monomers added over 1 1/2 hours at 80°C. The reaction conditions are maintained for an additional 2 hours. The latex measures 36.2 percent solids, fails the acetone and freeze-thaw stability and pesticide formulation stability tests.

6

Example IV:

Latex #4: Rubber Latex Encapsulated With Styrene *n*-Butyl Methacrylate And Post-Added (RPS<sup>⊖</sup>)

63.5 Parts of (RPS<sup>⊖</sup>) at 22.1 percent solids is added to 237.6 parts of Latex #3 and stirred overnight. The mixture measures 33.2 percent solids. The latex fails the acetone dilution test, the freeze-thaw test, and the pesticide formulation room temperature stability test.

Example V:

Latex #5: Rubber Latex Grafted With Styrene *n*-Butyl Methacrylate And (RPS<sup>⊖</sup>) To Form Structured Particles

1.00 Part of 2,2′-azobis (2-methylpropanenitrile) is mixed with 764.5 parts of Latex #1 and heated to 70°C while stirring under a nitrogen atmosphere. 50 Parts of a 50/50 solution of styrene and *n*-butyl methacrylate is added continuously with 227.3 parts of (RPS<sup>⊖</sup>) solution at 22.1 percent solids using the following schedule: 0 to 20 percent of monomers added over 2 1/2 hours at 70°C and the remaining 80 percent monomers added with 0 to 100 percent of (RPS<sup>⊖</sup>) solution over 1 1/2 hours at 80°C. The reaction conditions are maintained for an additional 2 hours. The latex measures 32.8 percent solids, passes the acetone dilution, freeze-thaw stability and pesticide formulation freeze-thaw stability tests.

Example VI:

| Ingredient | Weight Ratio |
|---|---|
| Chlorpyrifos | 3.0 |
| Methyl laurate | 1.0 |
| Ethoxylated Nonyl Phenol Surfactant (Igepal 620) | 1.0 |
| Latex comprising 71.4 percent of a rubber core of 7 percent styrene and 93 percent butadiene with a surface graft (14.3 percent) of a 50-50 copolymer of styrene and *n*-butyl methacrylate and 14.3 percent of an anionic reactive polymeric surfactant comprising 73.7 percent methyl methacrylate, 21.1 percent 2-sulfoethyl methacrylate, 5.27 percent inner salt and glycidyl methacrylate | 1.0 (solids) |
| Deionized Water | 5.4 |

EP 0 374 796 B1

This formulation contained 26.3 weight percent chlorpyrifos.

EXAMPLE VII:

The same ingredients as above were employed to give a formulation containing 17.5 weight percent chlorpyrifos wherein the weight ratios were:

| Chlorpyrifos | 2.0 |
|---|---|
| Methyl Laurate | 2.0 |
| Igepal 620 | 1.0 |
| Latex #5 | 1.0 |
| Deionized Water | 5.4. |

EXAMPLE VIII:

As above, in EXAMPLE VII, except that the mixture contains 8.8 weight percent chlorpyrifos with the weight ratios:

| Chlorpyrifos | 1.0 |
|---|---|
| Methyl Laurate | 3.0 |
| Igepal 620 | 1.0 |
| Latex | 1.0 |
| Deionized Water | 5.4. |

The above formulations when diluted with water to about 1 percent formulation showed good bloom, freeze-thaw and non-settling characteristics.

EXAMPLE IX:

Soil Penetration Evaluation:

A formulation comprising in parts by weight

| Chlorpyrifos | 2.0 |
|---|---|
| Methyl Laurate | 2.0 |
| Igepal 620 | 1.0 |
| Latex of Example V | 1.0 |
| Deionized Water | 5.4 |

was prepared. An amount containing 500 mg of formulated chlorpyrifos in 3.0 mL volume was diluted to 50 mL total volume with deionized water and introduced onto a 2 inch (5 cm) diameter 18 inch (45.7 cm) high column containing about 1150 grams dry soil (Midland, Michigan). The column was then eluted with about 650 mL deionized water and 450 mL of eluent was collected. The column was then frozen and cut into 4 equal quarters and analyzed for chlorpyrifos concentration by extracting with cyclohexane. Two separate columns were tested with the following results:

9

|  | Quarter | Mg Chlorpyrifos | Percent Distribution | Percent Recovery |
|---|---|---|---|---|
| Column A | 1 (top) | 277.5 | 61.7 | |
|  | 2 | 130.9 | 29.1 | 99.0 |
|  | 3 | 33.4 | 7.4 | |
|  | 4 | 7.8 | 1.7 | |
| Column B | 1 (top) | 282.5 | 61.7 | |
|  | 2 | 132.5 | 28.9 | 92.1 |
|  | 3 | 34.5 | 7.5 | |
|  | 4 | 8.6 | 1.9 | |

The concentration of chlorpyrifos at the lower depths indicates that 100 percent control of western spotted cucumber beetle larva would be achieved at depths greater than 13 inches (33).

In contrast to the above soil penetration data, similar tests with previously known latex-pesticide formulations such as, for example, the compositions of U.S. Patent 4,303,642, show that greater than 90% of the pesticide is retained in the top quarter of the soil column. This finding confirms the evaluations of said U.S. patent which indicated that using the formulation of said U.S. patent, 100 percent control of western spotted cucumber beetle larva was only acheived to a depth of 4 to 5 inches (5 to 12.7 cm).

Because of the greater soil penetrability of the compositions of this invention, less than 65 percent of the pesticide is retained in the top quarter and greater than 35 percent of the pesticide migrates to lower levels as indicated above and 100 percent control of western spotted cucumber beetle larva would be obtained at levels down to 18 inches (45.7 cm).

Example X Biological Activity

The organic pesticides employed in the stable aqueous emulsion formulation of the water insoluble organic pesticide/latex mixtures of the present invention have all been found to be as active biologically as when the pesticide is used in conventional formulations. Foliar and soil activity data are shown in Tables I and II respectively for the formulation of Example VII.

EP 0 374 796 B1

## TABLE 1

| Four-day residual toxicity of chlorpyrifos in formulation to beet armyworm on cotton leaves. Percent mortality was evaluated 72 hours after infestation | |
|---|---|
| Chlorpyrifos concentration (ppm) | Percent Mortality |
| 400 | 100 |
| 100 | 100 |
| 25 | 2 |
| 6.3 | 2 |
| 1.6 | 4 |
| control | 0 |

## TABLE 11

| Thirty-day residual toxicity of chlorpyrifos in formulation to western spotted cucumber beetle in California sandy loam soil. Percent mortality was evaluated 72 hours after infestation. | |
|---|---|
| Chlorpyrifos concentration (ppm) | Percent Mortality |
| 5.00 | 100 |
| 2.50 | 95 |
| 1.25 | 100 |
| 0.63 | 75 |
| 0.31 | 50 |
| 0.15 | 46 |
| control | 7 |

## Claims

1. An aqueous pesticidal emulsion concentrate formulation of a water-insoluble organic pesticide said emulsion comprising: (1) a water-insoluble organic pesticide; and (2) a structured particle latex composed of nonionic particles to which is bound a stabilizing layer containing stabilizing pH independent ionic groups chemically bound at or near the surface of the polymer particles.

11

**2.** An emulsion formulation as claimed in Claim 1 wherein a plasticizer for the pesticide is also present.

**3.** An emulsion formulation as claimed in Claim 1 wherein a cosurfactant for the pesticide is also present.

**4.** An emulsion formulation as claimed in Claim 1 wherein the stabilizing layer is formed by binding a reactive polymeric surfactant to the surface of a nonionic polymer particle.

**5.** An emulsion formulation as claimed in Claim 4 wherein the nonionic polymer core particle is butadiene or acrylate based nonionic polymers.

**6.** An emulsion formulation as claimed in any one of Claims 1-5 wherein the structured particle latex comprises a reactive polymeric surfactant having a copolymer of a pH independent anionic monomer and a nonionic monomer.

**7.** An emulsion formulation as claimed in Claim 5 wherein the nonionic monomer is methyl methacrylate.

**8.** An emulsion formulation as claimed in Claim 5 wherein the anionic monomer is 2-sulfoethyl methacrylate.

**9.** An emulsion formulation as claimed in any one of Claims 1-8 wherein a cosolvent is also present.

**10.** An emulsion formulation as claimed in Claim 8 wherein the cosolvent is methyl laurate.

**11.** An emulsion formulation as claimed in any one of Claims 1-10 wherein a cosurfactant is also present.

**12.** An emulsion formulation as claimed in any one of the preceeding claims wherein the pesticide is chlorpyrifos.

**13.** A stable aqueous emulsion pesticidal formulation of a water-insoluble organic pesticide said formulation comprising an association of the aqueous concentrate formulation as claimed in any one of the preceeding claims diluted with water.

**14.** A method for the control of the growth of agricultural pests in foliar or soil environments which comprises contacting said pest or their foliar or soil environments with a pesticidally effective amount of a stable aqueous emulsion pesticidal formulation of a water-insoluble organic pesticide as defined in Claim 13.

**Patentansprüche**

**1.** Wäßrige pestizide Emulsionskonzentratformulierung eines wasserunlöslichen organischen Pestizids, wobei die Emulsion umfaßt: (1) ein wasserunlösliches organisches Pestizid und (2) einen strukturierten teilchenförmigen Latex, welcher zusammengesetzt ist aus nicht-ionischen Teilchen, an welche eine stabilisierende Schicht gebunden ist, welche pH-unabhängige stabilisierende ionische Gruppen enthält, die chemisch an oder nahe der Oberfläche der Polymerteilchen gebunden sind.

**2.** Bmulsionsformulierung nach Anspruch 1, worin auch ein Plastifizierungsmittel für das Pestizid vorliegt.

**3.** Emulsionsformulierung nach Anspruch 1, worin auch ein zusätzliches oberflächenaktives Mittel für das Pestizid vorliegt.

**4.** Emulsionsformulierung nach Anspruch 1, worin die stabilisierende Schicht gebildet wird durch Binden eines reaktiven polymeren oberflächenaktiven Mittels an die Oberfläche eines nicht-ionischen Polymerteilchens.

**5.** Emulsionsformulierung nach Anspruch 4, worin das nichtionische Polymerkernteilchen auf Butadien oder Acrylat basierendes nicht-ionisches Polymer ist.

12

6. Emulsionsformulierung nach einem der Ansprüche 1 bis 5, worin der strukturierte teilchenförmige Latex ein reaktives polymeres oberflächenaktives Mittel mit einem Copolymer eines pH-Wert unabhängigen anionischen Monomers und ein nichtionisches Monomers umfaßt.

7. Emulsionsformulierung nach Anspruch 5, worin das nichtionische Monomer Methylmethacrylat ist.

8. Emulsionsformulierung nach Anspruch 5, worin das anionische Monomer 2-Sulfoethylmethacrylat ist.

9. Emulsionsformulierung nach einem der Ansprüche 1 bis 8, worin auch ein Verschnittmittel vorliegt.

10. Emulsionsformulierung nach Anspruch 8, worin das Verschnittmittel Methyllaurat ist.

11. Emulsionsformulierung nach einem der Ansprüche 1 bis 10, worin auch ein zusätzliches oberflächenaktives Mittel vorliegt.

12. Emulsionsformulierung nach einem der vorhergehenden Ansprüche, worin das Pestizid Chlorpyrifos ist.

13. Stabile wäßrige pestizide Emulsionsformulierung eines wasserunlöslichen organischen Pestizids, worin die Formulierung eine mit Wasser verdünnte Assoziation der wäßrigen Konzentratformulierung nach einem der vorhergehenden Ansprüche umfaßt.

14. Verfahren zur Steuerung des Wachstums von Pflanzenschädlingen auf Blatt- oder Bodenumgebung, umfassend Kontaktieren des Schädlings oder dessen Blatt- oder Bodenumgebung mit einer pestizid wirksamen Menge einer stabilen wäßrigen pestiziden Emulsionsformulierung eines wasserunlöslichen organischen Pestizids nach Anspruch 13.


**Revendications**

1. Formulation pesticide aqueuse concentrée sous forme d'émulsion d'un pesticide organique insoluble dans l'eau, ladite émulsion comprenant :
   (1) un pesticide organique insoluble dans l'eau
   (2) un latex de particules structurées composé de particules non ioniques auxquelles est fixée une couche de stabilisation contenant des groupes ionisés de façon indépendante du pH et qui sont liés chimiquement à la surface ou proche de la surface des particules de polymère.

2. Formulation en émulsion conforme à la revendication 1 comportant également un plastifiant du pesticide.

3. Formulation en émulsion conforme à la revendication 1 contenant également un autre agent tensio-actif du pesticide.

4. Formulation en émulsion conforme à la revendication 1, dans laquelle la couche de stabilisation est formée par greffage d'un agent tensio-actif polymère réactif sur la surface d'une particule polymère non ionique.

5. Formulation en émulsion conforme à la revendication 4, dans laquelle la particule polymère centrale non ionique est en polymères non ioniques à base de butadiène ou d'acrylate.

6. Formulation en émulsion conforme à une quelconque des revendications 1 - 5, dans laquelle le latex de particules structurée contient un agent tensioactif polymère réactif qui est un copolymère d'un monomère anionique de manière indépendante du pH et d'un monomère non ionique.

7. Formulation en émulsion conforme à la revendication 5, dans laquelle le monomère non ionique est le méthacrylate de méthyle.

8. Formulation en émulsion conforme à la revendication 5, dans laquelle le monomère anionique est le méthacrylate de 2-sulfoéthyle.

**9.** Formulation en émulsion conforme à une quelconque des revendications 1 - 8 contenant également un cosolvant.

**10.** Formulation en émulsion conforme à la revendication 8, dans laquelle le cosolvant est le laurate de méthyle.

**11.** Formulation en émulsion conforme à une quelconque des revendications 1-10 contenant également un autre agent tensio-actif.

**12.** Formulation en émulsion conforme à une quelconque des revendications précédentes dans laquelle le pesticide est le chlorpyrifos.

**13.** Formulation pesticide en émulsion aqueuse stable d'un pesticide organique insoluble dans l'eau ladite formulation comprenant l'association de la formulation aqueuse concentrée conforme à une quelconque des revendications précédentes avec de l'eau de dilution.

**14.** Procédé de limitation du développement d'infestations agricoles des feuilles et des sols comprenant la mise en contact de l'espèce infestante ou de son environnement - feuilles ou sols - avec une quantité pesticide efficace d'une formulation pesticide en émulsion aqueuse stable d'un pesticide organique insoluble dans l'eau conforme à la revendication 13.